## Europäisches Patentamt
## European Patent Office
## Office européen des brevets

(19)

(11) Veröffentlichungsnummer: **0 192 673**
**B1**

(12) # EUROPÄISCHE PATENTSCHRIFT

(45) Veröffentlichungstag der Patentschrift:
**10.05.89**

(51) Int. Cl.⁴: **B 08 B 15/02,** A 61 C 19/00

(21) Anmeldenummer: **85904066.7**

(22) Anmeldetag: **09.08.85**

(86) Internationale Anmeldenummer:
**PCT/DE 85/00268**

(87) Internationale Veröffentlichungsnummer:
**WO 86/01134 (27.02.86 Gazette 86/05)**

(54) **ARBEITSPLATZSCHUTZVORRICHTUNG ZUM DURCHFÜHREN MANUELLER ARBEITEN.**

(30) Priorität: **17.08.84 DE 3430224**

(43) Veröffentlichungstag der Anmeldung:
**03.09.86 Patentblatt 86/36**

(45) Bekanntmachung des Hinweises auf die Patenterteilung:
**10.05.89 Patentblatt 89/19**

(84) Benannte Vertragsstaaten:
**CH DE FR GB LI NL SE**

(56) Entgegenhaltungen:
**CH-A-448 439**
**DE-C-423 479**
**DE-C-527 639**
**US-A-4 059 903**

(73) Patentinhaber: **HAUSER, Bernhard,**
**Stöckachstrasse 56, D-8702 Eisingen (DE)**

(72) Erfinder: **HAUSER, Bernhard, Stöckachstrasse 56,**
**D-8702 Eisingen (DE)**

(74) Vertreter: **Pöhner, Wilfried Anton, Dr.,**
**Kaiserstrasse 27 Postfach 63 23, D-8700 Würzburg**
**1 (DE)**

EP 0 192 673 B1

## Beschreibung

Die Erfindung betrifft eine Arbeitsplatzschutzvorrichtung zum Durchführen manueller Arbeiten entsprechend dem Oberbegriff des Anspruches 1.

Eine derartige Vorrichtung ist aus der US-A-4 059 903 bekannt. Bei einer derartigen Vorrichtung bewegt sich die Luft unter Ausbildung von Wirbeln und Turbulenzen vom Luftein- zum -auslaß. Die Hände sind den Strömungen ausgesetzt, was zu berufstypische Erkrankungen, wie Gliederschmerzen und Rheuma führt.

Hiervon ausgehend hat sich die Erfindung die Schaffung eines Arbeitsplatzschutzvorrichtung zur Aufgabe gemacht, bei dem für den Benutzer ein Arbeiten ohne gesundheitliche Gefährdungen möglich wird.

Gelöst wird diese Aufgabe durch die Merkmale des Patentanspruchs 1 dh.

Arbeitsplatzschutzvorrichtung zum Durchführen manueller Arbeiten, bei der Luft abgesaugt wird, mir einer bis auf zwei, jeweils dem Einführen einer Hand dienende Öffnungen geschlossenes Gehäuse, welches mit einem Lufteinlaß und -auslaß versehen ist und der Lufteinlaß mit Überdruck und/oder der Luftauslaß mit Unterdruck beaufschlagt ist und mit einem im Gehäuse angeordneten Sichtfenster, dadurch gekennzeichnet, daß Lufteinlaß und -auslaß einander derart zugeordnet sind, daß sich im Inneren des Gehäuses ein Luftband ausbildet, und daß Lufteinlaß und -auslaß nach innen zu fächerförmig gestaltet sind und der Luftstrom tangential zu den Innenwänden des Gehäuses geleeitet wird.

Unter der Begriff "Luftband" ist im Sinne der Erfindung die Ausbildung einer laminaren, d.h. eine minimal Wirbel ausbildende Strömung zu verstehen. Durch die tangentiale Strömung entlang den Innenwänden des Gehäuses werden die Hände nicht angeströmt, jedoch die entstehenden Staubpartikel und Gase vom Luftstrom angesaugt, erfaßt und nach außen transportiert. Die Fächerform von Luftein- und -auslaß ermöglicht die Erfassung vom nahezu dem gesamten Innenraum, das Sichtfenster wird selbsttätig gereinigt und der von den Händen eingenommene mittige Bereich bleibt weitergehend frei von Luftbewegungen.

Diese Vorrichtung wird wie folgt gehandhabt: Die Bedienungsperson führt eine Hand sowie teilweise den Unterarm in jeweils eine Öffnung ein, so daß sie weitergehend verschlossen wird. Die Hände befinden sich dann etwa in der Mitte des Gehäuses, erfassen das Werkstück und können es mit Hilfe entsprechender Arbeitsgeräte schleifen, polieren odgl. Durch das Sichtfenster ist eine präzise Beobachtung von Werkstück und Händen möglich. Während der Bearbeitung wird Staub oder Gas freigesetzt, das durch das Luftband angesaugt, mitgeführt und aus dem Gehäuse transportiert wird. Der entstandene Staub und das Gas können sich nicht im Raum verteilen und nicht eingeatmet werden. Die Verwendung von Atemschutzmasken, wie sie bei Freisetzung gesundheitsschädigender Stoffe und Gase notwendig ist, erübrigt sich. Ein erheblicher Vorteil besteht darin, daß der durch den Luftauslaß abtransportierte Staub im Falle hochwertiger Materialien, wie z. B. Gold. Platin, durch an sich bekannte Maßnahmen, wie z. B. Filter gesammelt und wiederverwendet werden kann. Des weiteren erreicht man eine Absenkung des Geräuschpegels und eine bessere Geräuschdämmung. Die Vorrichtung wird verwendet in zahntechnischen Labors, bei Zahnärzten und Fachärzten der Kieferorthopädie, sowie bei der Bearbeitung von Edelmetallen und Schmuck und überall dort, wo bei der Materialbearbeitung giftiger Staub und Gase freigesetzt werden.

Da Aufgabe des Luftstromes die Mitführung entstehender Staubpartikel ist, die sich aufgrund ihres Eigengewichtes nach unten bewegen, ist es sinnvoll, sich diese Einbewegung bei der Abführung zu nutze zu machen, indem der Lufteinlaß im oberen und der -auslaß im unteren Bereich des Gehäuses angebracht werden. Die durch den Luftstrom hervorgerufene Abwärtsbewegung der Staubpartikel wird dann durch die Schwerkraft unterstützt.

In einer bevorzugten Ausgestaltung ist im Inneren des Gehäuses eine Handauflageplatte angebracht. Dann kann während der Bearbeitung des Objektes der Unterarm und/oder die Hand aufgelegt werden, so daß bei entspannter Muskulatur ein präzises und ermüdungsfreies Arbeiten durchführbar wird.

In einer anderen Ausführungsform ist im Lufteinlaß ein Steuerventil angebracht, bei dessen Betätigung die einströmende Luft auf die Handauflagefläche zu geleitet wird. Mit zunehmender Bearbeitungsdauer wird sich auf der Handauflageplatte ein Film aus Schleif- und Polierstaubabsetzung und zwar um so mehr, je geringer der Luftstrom in diesem Bereich ist. Eine Reinigung der Handauflegeplatte von Zeit zu Zeit ist wünschenswert, wozu bei der soeben geschilderten Ausführungsform lediglich ein Umlegen des Steuerventiles erforderlich ist, so daß der Luftstrom direkt auf die Handauflageplatte geleitet wird und sie hierdurch von Staubablagerungen reinigt. Nach Beendigung dieses Vorganges wird das Steuerventil wieder in seine Ausgangsposition gebracht.

Eine weitere Maßnahme zur Vermeidung von rheumatischen und Gelenkserkrankungen besteht darin, die zugeführte Luft auf eine angenehme Temperatur vorzuwärmen.

Des weiteren ist von Vorteil, für das Sichtfenster Glas oder einen hochwertigen Kunststoff, z. B. Acrylglas zu verwenden, damit jederzeit eine klare Durchsicht gewährleistet ist, da Glas und hochwertige Kunststoffe unempfindlich gegen Verkratzungen sind.

Eine besonders gute Einsehbarkeit unter verschiedenen Blickwinkeln erhält man dann, wenn die Fronthaube in ihrer Gesamtheit als Sichtfenster ausgebildet ist.

Schließlich ist noch im Inneren des Gehäuses eine Innenbeleuchtung vorgesehen, die z. B. seitlich oder über dem Sichtfenster angebracht werden kann und bei Bestrahlung des Arbeitsbereiches aus unterschiedlichen Richtungen eine schattenfreie Ausleuchtung und eine Unabhängigkeit von äußeren Lichtquellen mit sich bringt.

In Weiterbildung wird zu der erfindungsgemäßen Arbeitsplatzschutzvorrichtung eine Gebläseeinheit vorgeschlagen, welche aus einem Gebläsegehäuse besteht, in dem ein regulierbares Gebläse, insbesondere ein regulierbares Radialgebläse, ein Filter und ein nach außen führender Kanal angeordnet sind. Die Strömungsrichtung ist wie folgt: Über das Gebläse wird an der Eingangsseite Luft angesaugt, die anschließend ein Filter durchströmt und dann über das Gebläse selbst zur Ausgangsseite hin beschleunigt wird. Um den besonders vorteilhaften geschlossenen Kreislauf zu erhalten, ist die Ausgangsseite der Gebläseeinheit an den Lufteinlaß und die Eingangsseite an den Luftauslaß angeschlossen. Zwischen Gebläse und, Ausgangsseite verläuft ein nach außen führender Kanal, in dem ein Schwebstoff- und/oder Gasfilter zwischengeschaltet ist, durch welche der während bestimmter Betriebsphasen auftretende Überdruck entweichen und die zirkulierende Luft an die umgebende Athmosphäre abgegeben werden kann. Der dort befindliche Filter stellt sicher, daß keine Schwebstoffe und/oder Gase aus dem Inneren des Gehäuses nach außen dringen können. Die vorgeschlagene Gebläseeinheit bietet eine ideale Ergänzung zur oben bereits beschriebenen Arbeitsplatzschutzvorrichtung.

Um die Temperatur der in die Arbeitsplatzschutzvorrichtung einströmenden Luft auf einen Wert einzuregeln, der die Auskühlung der Hände der Bedienungsperson unmöglich macht, ist die Anordnung eines Heizelementes in den Luftstrom und zwar im Bereich der Ausgangsseite vorgesehen.

Weitere Einzelheiten, Merkmale und Vorteile der Erfindung lassen sich dem nachfolgenden Beschreibungsteil entnehmen, in dem ein Ausführungsbeispiel anhand der Zeichnungen näher erläutert ist. Es zeigen:

Figur 1 einen Schnitt in Längsrichtung durch die erfindungsgemäße Vorrichtung,
Figur 2 eine Draufsicht in Prinzipsskizze.
Figur 3 eine Draufsicht auf die Prinzipsskizze einer erfindungsgemäßen Gebläseeinheit.

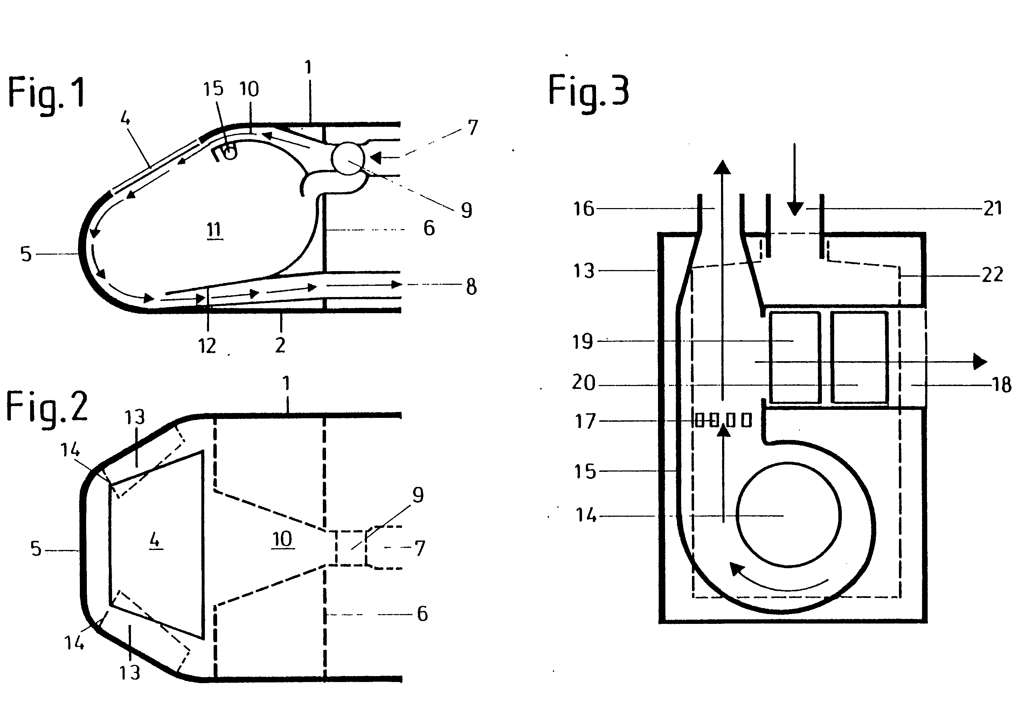

Die in Figur 1 gezeigte Vorrichtung besteht aus einem Gehäuse 1, dessen Form im wesentlichen bestimmt wird durch eine Bodenplatte 2 und einer parallel hierzu verlaufenden Deckplatte 3, die an der Vorderseite über ein im Winkel hierzu verlaufendes Sichtfenster 4 sowie ein Bogenstück 5 miteinander verbunden sind. Auf der gegenüberliegenden Seite ist das Gehäuse 1 über eine Rückwand 6 nach abgeschlossen, in welche im oberen Bereich ein Lufteinlaß 7 und im unteren ein Luftauslaß 8 eingeformt sind. Bei Beaufschlagung des Luftauslaßes 7 gelangt die Luft zunächst an das Steuerventil 9 und von dort über einen fächerförmig sich verbreitenden Kanal 10 im Bereich des Sichtfensters 4 an die Innenwandung des Gehäuses 1. Man erreicht durch die fächerförmige Gestaltung des Kanales 10, daß die über den stutzenförmigen Lufteinlaß 7 einströmende Luft innerhalb des Gehäuses 1 über eine große Fläche verteilt wird.

Die eingelassene Luft strömt, ausgehend von Kanal 10 zunächst auf der Rückseite des Sichtfensters 4 und dann des Bogenstückes 5 entlang und verläßt über Luftauslaß 8 das Gehäuse 1. In den eigentlichen, im Zentrum befindlichen Arbeitsbereich 11, der nach unten durch eine Handauflageplatte 12 begrenzt ist, gelangen nur vergleichsweise schwach Luftströmungen. Während des Arbeitsvorganges befinden sich in diesem Bereich die Hände mit dem Arbeitswerkzeug sowie das Werkstück.

Durch Umschalten des Steuerventiles 9 kann. die über den Lufteinlaß 7 einströmende Luft derart umgelenkt werden, daß sie die Handauflageplatte 12 unmittelbar anströmt. Diese Einstellung ist insbesondere dann von Vorteil, wenn es gilt, den sich auf der Schleif- und Polierstaub zu entfernen. Hierfür wird das Steuerventil 9 kurzzeitig umgeschaltet und im übrigen das An- und Absaugen der Luft wie in der Arbeitsphase beibehalten.

Oberhalb des Arbeitsbereichs 11 ist eine der Bestrahlung des Werkstücks dienende Innenbeleuchtung 15 angebracht.

In der Zeichnung nicht dargestellt sind die Vorrichtungen, mit deren Hilfe ein Überdruck auf den Lufteinlaß 7 und/oder ein Unterdruck auf den Luftauslaß 8 gegeben werden.

Figur 2 zeigt das Gehäuse 1 der erfindungsgemäßen Vorrichtung in Draufsicht, wobei zur besseren Verdeutlichung die unmittelbar unter der Deckplatte 3 befindlichen Gehäuseteile in gestrichelten Linien angedeutet sind. Der Grundriß des Gehäuses 1 ist etwa rechteckförmig, wobei jedoch das linke durch das Bogenstück 5 definierte Ende von Trapezform ist. In den Flanken desselben befindet sich jeweils eine Öffnung 13, die mit einem manschettenförmigen, nach innen zu weisende Stutzen 14 versehen ist. Durch diese Öffnungen 13 wird jeweils eine Hand und teilweise der Unterarm der Bedienungsperson ins Innere des Gehäuses 1 eingeführt. Etwa in der Mitte zwischen den beiden Öffnungen 13, also dort, wo sich die Hände nach dem Einführen befinden ist in der Deckplatte ein Sichtfenster 4 angebracht, durch das ein genaues Beobachten des Arbeitsvorganges möglich ist. Selbstverständlich ist denkbar, daß die Anordnung eines Sichtfensters dann unterbleibt, wenn das Material des Gehäuses 1 durchsichtig gewählt ist.

Nach rechts zu schließt sich der fächerförmig erweiternde Kanal 10 an, durch den die über den Lufteinlaß 7 beaufschlagte Luft strömt und über den Innenraum des Gehäuses 1 verteilt wird. Der Lufteinlaß 7 befindet sich in der Rückwand 6 und ist mit einem Steuerventil 9 ausgerüstet, mit dessen Hilfe in der oben bereits beschriebenen Weise die einströmende Luft statt in den Kanal 10 auf die Handauflageplatte 12 zu deren Reinigung geleitet wird.

Sieht man von dem Steuerventil 9 ab, ist der Aufbau der Vorrichtung im Bereich des Luftauslaßes 8 weitgehend identisch mit dem aus Lufteinlaß 7 und dem Kanal 10 gebildeten Einlaßbereich.

In Figur 3 ist in Draufsicht eine erfindungsgemäße Gebläseeinheit in prinzipienhafter Darstellung wiedergegeben. Sie besteht aus einem Gebläsegehäuse 13, in dessen unterem Teil ein Radialgebläse 14 angeordnet ist, durch welches Luft nach oben zu in Richtung des Strömungskanales 15 zur Ausgangsseite 16 hin beschleunigt wird. In diesem Strömungskanal 15 ist ein Heizelement 17 zur Erwärmung der Luft angeordnet. In Strömungsrichtung gesehen dahinter führt ein Kanal 18 ins Freie und in welchem sich ein Schwebstoff- und/oder Gasfilter 19, 20 befindet. Der Kanal 18 hat die Funktion, bei einem Überdruck oder bei kurzzeitig erhöhtem Strömungswiderstand in Richtung der Ausgangsseite 16 der durchströmenden Luft eine Ablaßmöglichkeit anzubieten. Sämtliche der soeben beschriebenen Teile sind in durchgezogenen Linien wiedergegeben.

Darunter befindet sich, was durch gestrichelte Linienführung angedeutet ist, eine weitere Ebene, die gebildet wird aus der Einlaßseite 21, die in einen Filter 22 übergeht. Dieser dient dem Ausscheiden und Sammeln der in der durchströmenden Luft befindlichen Partikel. Von diesem wird die Luft über das Radialgebläse 14 angesaugt und dem Strömungskanal 15 eingespeist. Die Aufgabe der gezeigten Gebläseeinheit besteht in der Aufrechterhaltung der Luftzirkulation, dem Ausscheiden der in diesem Strom befindlichen Partikel und der Erwärmung auf "handwarme" Temperatur.

Im Ergebnis erhält man durch die erfindungsgemäße Vorrichtung die Möglichkeit den beim Schleifen und Polieren entstehende Staub nahezu vollständig abzusaugen und, was insbesondere wichtig bei der Bearbeitung wertvoller Materialien, wie z. B. Gold, Platin oder dgl. von Bedeutung ist, aufzusammeln und wiederzuverwenden. Darüber hinaus wird das Tragen einer Arbeitsschutzmaske überflüssig.

**Patentansprüche**

1. Arbeitsplatzschutzvorrichtung zum Durchführen manueller Arbeiten, bei der Luft abgesaugt wird, mit einem bis auf zwei, jeweils dem Einführen einer Hand dienende Öffnungen (13) geschlossenes Gehäuse (1), welches mit einem Lufteinlaß (7) und -auslaß (8) versehen ist und der Lufteinlaß (7) mit Überdruck und/oder der Luftauslaß (8) mit Unterdruck beaufschlagt ist und mit einem im Gehäuse (1) angeordneten Sichtfenster (4), dadurch gekennzeichnet, daß Lufteinlaß (7) und -auslaß (8) einander derart zugeordnet sind, daß sich im Inneren des Gehäuses (1) ein Luftband ausbildet, und daß Lufteinlaß (7) und -auslaß (8) nach innen zu fächerförmig gestaltet sind und der Luftstrom tangential zu den Innenwänden des Gehäuses (1) geleitet wird.

2. Vorrichtung nach Anspruch 1, dadurch gekennzeichnet, daß der Lufteinlaß (7) im oberen und der -auslaß (8) im unteren Bereich des Gehäuses (1) angebracht ist.

3. Vorrichtung nach einem der Ansprüche 1, oder 2, gekennzeichnet durch eine im Inneren angebrachte Handauflageplatte (12).

4. Vorrichtung nach Anspruch 3, gekennzeichnet durch ein Steuerventil (9) im Lufteinlaß (7), durch das die einströmende Luft auf die Handauflageplatte (2) geleitet werden kann.

5. Vorrichtung nach einem der Ansprüche 1 bis 4, dadurch gekennzeichnet, daß die zugeführte Luft erwärmt ist.

6. Vorrichtung nach einem der Ansprüche 1 bis 5, gekennzeichnet durch ein Sichtfenster (4) aus Glas oder einem hochwertigen Kunststoff, wie z.B. Acrylglas.

7. Vorrichtung nach einem der Ansprüche 1 bis 6, dadurch gekennzeichnet, daß die gesamte Fronthaube das Sichtfenster (4) ist.

8. Vorrichtung nach einem der Ansprüche 1 bis 7, gekennzeichnet durch eine Innenbeleuchtung (15).

9. Arbeitsplatzschutzvorrichtung nach einem der Ansprüche 1 bis 8 mit einer Gebläseeinheit, dadurch gekennzeichnet, daß im Gebläsegehäuse (13) ein regulierbares Gebläse, insbesondere ein Radialgebläse (14), angeordnet ist, welches an der Eingangsseite (21) über einen Filter (22) an den Luftauslaß (8) und an der Ausgangsseite (16) an den Lufteinlaß (7) angeschlossen ist, wobei zwischen Gebläse und Ausgangsseite (16) ein mit Schwebstoff und/oder Gasfilter (19, 20) versehener Kanal (18) nach außen führt.

10. Vorrichtung nach Anspruch 9, gekennzeichnet durch Heizelement (17) im Bereich der Ausgangsseite (16).

## Claims

1. Workplace protection device for the execution of manual work wherein air is extracted, having a housing (1) that is closed except for two openings (13) serving for the insertion of a hand, which is provided with an air inlet (7) and outlet (8), and said air inlet (8) is subject to overpressure and/or said air outlet (8) to under-pressure, and having a viewing pane (4) disposed in said housing (1), wherein said air inlet (7) and outlet (8) are disposed with respect to each other in such a manner that a band of air forms inside said housing (1), and said air inlet (7) and outlet (8) are shaped inwardly as fans, and the air stream is directed tangentially to the interior walls of said housing (1).

2. Device according to claim 1 wherein said air inlet (7) is disposed in the upper part and said outlet (8) in the lower part of said housing (1).

3. Device according to one of claims 1 or 2 wherein a hand-rest plate (12) is disposed internally.

4. Device according to claim 3 wherein a control valve (9) is disposed in said air inlet (7) by means of which the incoming air can be directed onto said hand-rest plate (12).

5. Device according to one of claims 1 to 4, wherein the incoming air is heated.

6. Device according to one of claims 1 to 5 wherein said viewing pane (4) is made of glass or a high-quality plastics material such as acrylic glass.

7. Device according to one of claims 1 to 6 wherein the complete front cover forms said viewing pane (4).

8. Device according to one of claims 1 to 7 wherein interior lighting (15) is provided.

9. Device according to one of claims 1 to 8 having a blowing unit wherein an adjustable blower, especially a radial blower (14) is disposed in a blower housing (13), being connected on its intake side (21) via a filter (22) to said air outlet (8) and at its outlet side (16) to said air inlet (7), whereby a duct (18) being filled with a filter for air-suspended matter and/or gas (19, 20) leads outward.

10. Device according to claim 9 wherein a heating element (17) is disposed in the area of the outlet side (16).

## Revendications

1. Dispositif protecteur d'une place de travail pour des travaux manuels, pendant quels il est aspiré avec une boîtier (1), qui est, sauf deux ouvertures (13) chaque pour insérer une main, fermée, quelle est munie d'une entrée d'air (7) et d'une sortie d'air (8) et l'entrée (7) est injectée par une surpression et/ou la sortie (8) par une dépression et avec une fenêtre (4) dans la boîtier (1), caractérisé par le fait que l'entrée (7) et la sortie (8) sont rangées de telle manière que dans l'intérieur de la boîtier (1) se forme un ruban d'air et l'entrée (7) et la sortie (8) sont vers l'intérieur en forme d'eventail et le ruban d'air est conduit tangentiel le long de la paroi intérieure de la boîtier (1).

2. Dispositif d'après la demande 1, est caractérisé par le fait que l'entrée (7) situé dans la région supérieur et la sortie (8) dans la région inférieur de la boîtier (1).

3. Dispositif d'après la demande 1 ou 2, caractérisé par un plateau (12) pour imposer la main située dans l'intérieur.

4. Dispositif d'après la demande 3, caractérisé par une soupape de réglage dans l'entrée, qui conduit l'air affluant au plateau (12) pour imposer la main.

5. Dispositif d'après une des demandes 1 - 4, caractérisé par le fait que l'air amené est échauffé.

6. Dispositif d'après une des demandes 1 - 5, caractérisé par le fait que la fenêtre est composée de verre ou de plastique de qualité supérieure.

7. Dispositif d'après une des demandes 1 - 6, caractérisé par le fait que le capot entier est la fenêtre (4).

8. Dispositif d'après une des demandes 1 - 7, caractérisé par un éclairement intérieur (15).

9) Dispositif protecteur d'une place de travail d'après une des demandes 1 - 8 avec un élément soufflant, caractérisé par le fait que dans la boîte d'élément soufflant est disposé (13) une soufflerie réglable, en particulier une soufflerie radiale (14), laquelle admission (21) est branché par un filtre (22) à la sortie et laquelle issue (16), qui est muni avec un filtre pour substances en suspension et/ou pour gaz et qui est conduit à l'extérieur.

10. Dispositif d'après la demande 9, caractérisé par des éléments de chauffage (17) dans la région de l'issue (16).

Fig.1

Fig.3

Fig.2

EP 0 192 673 B1